# EUROPEAN PATENT SPECIFICATION

(11) **EP 2 028 754 B1**
(45) Date of publication and mention of the grant of the patent: **22.09.2010**
(21) Application number: 07114862.1
(22) Date of filing: 23.08.2007
(51) Int. Cl.: H02M 5/257

(54) **A dimmer with charge pump**
Dimmer mit Ladungspumpe
Gradateur avec pompe de charge

(43) Date of publication of application: 25.02.2009
(73) Proprietor: NIKO, N.V., 9100 Sint-Niklaas (BE)
(72) Inventor: Bal, Freddy, 9120 Beveren (BE)
(74) Representative: Van Ballaer, Evi Maria August

(56) References cited:
- WO-A-2006/124278
- US-A1- 2004 251 884

## Description

### Field of the Invention

The present invention generally relates to dimmers that are typically used to control the current delivered from an alternating current (AC) power source to a load, for instance a capacitive load such as an electronic transformer or an inductive load such as a ferro-magnetic transformer, a lamp, etc., or a resistive load. The invention in particular improves the compactness, component usage and heat dissipation of such dimmers in order to make these dimmers more suitable for flush mounting applications.

### Background of the Invention

A conventional prior art dimmer has two connections, a first connection to an AC power supply and a second connection to the load that has to be dimmed. This way, the dimmer and the load are series coupled between the AC power supply terminals, enabling the dimmer to control the current that is delivered to the load. The conventional prior art dimmer further comprises two semi-conductor switches, e.g. field effect transistors (FETs) or one triac (or AC-switch), that are anti-serial coupled and a controller, e.g. a microprocessor, that controls the on/off operation of the two semi-conductor switches such that reverse phase control dimming is implemented. In other words, the two semiconductor switches are controlled in such a way that the first semiconductor switch operates in its conductive state during the first, positive half cycle of the AC waveform and the second semiconductor switch operates in its conductive state during the second, negative half cycle of the AC waveform. Depending on the desired dimming level, the first and second semiconductor switches of the conventional prior art dimmer are turned on at the beginning of the half cycle of the AC waveform (voltage zero crossing) and turned off at some point in time during the half cycle. This is the case for capacitive loads and is called "trailing edge" dimming mode (TE-dim). In case of inductive loads, the first and second semiconductor switches are turned on at some point in time during the half cycle, the point being dependent on the desired dimming level, and turned off at the end of the half cycle of the AC waveform, during current zero crossing. This way of dimming is called "leading edge" dimming mode (LE-dim). The desired dimming level is typically communicated to the controller through signalling received from a button or control module that is manipulated by the user. The first and second semiconductor switches used in the known state of the art dimmers require a high clamping voltage and have typically a large Rdson value. They are for instance implemented through FETs with a Rdson value of 290 mΩ (milli-ohm) and a clamping voltage of 700 V (Volt), as a result of which these components are expensive, relatively large, and power dissipation through heating of these components is substantial.

In order to provide a DC voltage to power the controller of the semiconductor switches, e.g. a processor or microprocessor, it has been suggested to integrate DC power supply circuitry in prior art dimmers. Such DC power supply circuitry typically contains a charging capacitor that stores energy coming from the AC power supply whenever the semiconductor switches of the dimmer are in their non-conductive state. Examples are for instance a cat-ear power supply which draws energy near the zero-crossings of the AC waveform, when the two semiconductor switches are non-conducting. An example of such a cat-ear power supply for dimmer configuration is described in *Unites States Patent Application* US 2004/0251884 *entitled "High Efficiency Off-Line Linear Power Supply".* An alternative could be a standard switch-mode power supply. In order to draw and store energy during the non-conductive state of the dimmer, the power supply circuitry itself contains semiconductor switches which are turned on to charge the capacitor during the off-times of the dimmer's semiconductor switches. The semiconductor switches of the power supply circuitry are also relatively large, expensive, power dissipating FETs or a triac, whose Rdson values and clamping voltages are comparable to those of the dimmer's semiconductor switches. As a result, the state of the art dimmers with integrated DC power supply circuitry are not very suitable for flush mounting applications where the dimmer and eventually the control module are integrated in the wall and no supplementary, non-aesthetic housing surrounding the dimmer is placed on the wall. The integrated cat-ear power supply known from US 2004/0251884 A1 further contains over-current protection and over-voltage protection circuitry rendering the prior art dimmer configurations even more complex and voluminous.

Since the DC power supply circuitry known from prior art dimmer configurations only draws energy when the semiconductor switches are non-conducting, the design of these dimmers is plagued by a trade-off between maximizing the brightness or light intensity (requiring a large on-state) and sufficiently loading the DC power supply circuitry (requiring a large off-state). Indeed, in order to guarantee proper operation of the dimmer, its controller must be permanently supplied with the appropriate DC voltage, implying that the DC power supply circuitry must be able to store sufficient energy during times when both semiconductors are non-conducting in order to preserve the DC voltage level. As a consequence, there will be a minimum time during which both semiconductor switches have to be non-conductive. On the other hand, the light intensity of the dimmed lamp will increase when the semiconductor switches stay longer in their conductive states. A solution to cope with this trade-off, i.e. a solution ensuring sufficient charging time for the DC power supply circuitry while still maximizing the obtainable light intensity, is described in the *International Patent Application* WO 2006/124278 *entitled "Dimmer Having a Power Supply Monitoring Circuit"* and consists in monitoring the power supply level of the DC power supply circuitry and decreasing the on-time of the semiconductor switches as soon as this power supply level drops below a predetermined bottom threshold. The additional circuitry required to monitor the power supply level increases the complexity and volume of the known dimmer configurations and does not improve the heat dissipation rendering these dimmers less suitable for flush mounting applications.

It is an objective of the present invention to disclose a dimmer circuit with integrated DC power supply for the controller, which is substantially smaller and is able to deliver more DC energy than the known prior art dimmers and which is consequently more suitable for flush mounting applications. It is an additional objective to provide a dimmer circuit with reduced heat dissipation resulting from AC-to-DC conversion, and which does not require additional over-voltage and over-current protection as part of the integrated DC power supply.

### Summary of the Invention

According to the present invention, the drawbacks of existing dimmer circuits are overcome and the above mentioned objectives are realized by the dimmer circuit defined by claim 1, comprising:
first and second semiconductor switches anti-serial coupled between the AC voltage source and the load, and operable to have a conducting state and a non-conducting state;
a first control circuit adapted to control the first and second semiconductor switches to operate respectively in their conducting state or non-conducting state;
a DC power supply circuit comprising a capacitor, adapted to draw current from the AC voltage source during at least part of the conducting state of the first and second semiconductor switches, and adapted to supply DC power to at least the first control circuit;
third and fourth semiconductor switches anti-serial coupled between said first and second semiconductor switches, and operable to have a conducting state and a non-conducting state during which non-conducting state said capacitor is charged; and
a second control circuit adapted to control the third and fourth semiconductor switches to operate into their conducting state during dimming operation of the dimmer circuit and to operate into their non-conducting state during said charging of said capacitor and dimming operation of the dimmer circuit.

Thus, opposite to traditional charge pumps, the DC power supply circuit that forms part of the dimmer circuit according to the present invention makes use of third and fourth semiconductor switches to divide the half cycle AC waveform period into an interval for dimming operation and an interval for charging and dimming operation, depending on the desired dimming level. These third and fourth semiconductor switches are protected from the AC voltage level through the first and second semiconductor switches and therefore can be realised by inexpensive, small-size, low voltage field effect transistors whose dissipation losses are minor. The role of the first and second semiconductor switches can be assumed by the power field effect transistors that already form part of a traditional dimmer. Their role will be to convert the AC voltage level to a lower power level such that the third and fourth semiconductor switches are not exposed to the high voltage levels. These power semiconductors that already form part of a traditional dimmer typically have high dissipation losses which are drained off via the dimmer's cooling plate or fixture. The reuse of the dimmer's power semiconductors to protect the low power semiconductors that are actually dosing the amount of energy that will be charged cyclically by the DC power supply consequently enables to reduce the size and price of dimmer circuits with integrated DC charge pump, and enables to drain the heat dissipation resulting from AC-to-DC conversion without additional, dedicated cooling fixtures. The dimmer circuit according to the present invention therefore becomes extremely suitable for flush mounting applications where size and internal dissipation are critical factors.

In an optional embodiment of the dimmer circuit according to the present invention, the first and second semiconductor switches are power field effect transistors with a Rdson value of at least 100 milli-Ohms, as defined by claim 2.

This way, the first and second semiconductor switches are power semiconductors that can drain dissipation losses resulting from the high to low voltage conversion via the cooling fixture typically attached to such power semiconductor. Advantageously, the main semiconductors, i.e. the first and second semiconductors, are the power FETs already available in the dimmer, such that no additional space, cost and/or heat dissipation result from the introduction of new components.

Further optionally, the third and fourth semiconductor switches in the dimmer circuit according to the present invention may be low power field effect transistors with a Rdson value of at most 50 milli-Ohms, as defined by claim 3.

Indeed, thanks to the protective role of the first and second semiconductor switches, the sub semiconductors, i.e. the third and fourth semiconductors, will have neglectable heat dissipation during normal dimmer operation and consequently can be chosen to have very low Rdson values. These sub semiconductors typically also will be smaller in size and will be less expensive. Their clamping voltage can be significantly smaller than the clamping voltage of the main semiconductors because of the protection for over-voltages provided by the main semiconductors. The third and fourth semiconductors may for instance have clamping voltages of 20 V (Volts).

A further, optional feature of the dimmer circuit according to the present invention is the presence of a shunt resistor, coupled between the third and fourth semiconductor switches, and adapted to limit the current delivered to the load during dimming operation of said dimmer circuit. This feature is defined by claim 4.

The shunt resistor will be designed to reduce the current in dimmer operation, i.e. when the first, second, third and fourth semiconductor switches are all in their conductive state. Knowing the AC voltage supply level, the value of the shunt resistor may for instance be calculated to limit the current at 8 to 9 A (Ampères).

In an embodiment of the dimmer circuit according to the present invention with shunt resistor, a protective feedback loop may optionally be included to sense the current level through the shunt resistor, and to instruct the first control circuit to operate the first and second semiconductor switches in their non-conductive state within a time interval of 100 microseconds from the instant where the current level exceeds a certain threshold.

Thus, in addition to just limiting the current through the shunt resistor, the current level may be measured or sensed, enabling to take protective action in case of excessive high currents. The dimmer circuit may be deactivated within a very short time interval of at most 100 microseconds by immediately instructing the main semiconductor's control circuit, e.g. with gate voltage interruption, to bring the first and second semiconductor switches in their non-conductive states. The short time interval of 100 microseconds is best respected because in case of a short-circuit, the AC voltage of e.g. 300 V may appear across semiconductors that are conveying a current of 9 A, which would result in very high heat dissipation, possibly causing defect of the first and second semiconductor switches.

Further optionally, as defined by claim 6, the dimmer circuit according to the present invention may comprise a clamping varistor, coupled between its first terminal and its second terminal, and adapted to protect the dimmer circuit for external over-voltages from the AC power supply.

Such varistor with clamping voltage of for instance 700 V provides a primary protection for over-voltages present in the external AC power source, e.g. as a result of variations in the mains voltage. The varistor may optionally be supplemented with a parallel capacitor to eliminate radio frequency (RF) disturbances induced in the mains voltage.

Another optional aspect of the dimmer circuit according to the present invention is that it may comprise a voltage detection circuit adapted to sense a voltage from the AC power supply over the dimmer circuit, and adapted to control the first and second semiconductor switches to operate in their non-conducting state. This optional aspect is defined by claim 7.

Thus, a secondary over-voltage protection may be realised through a detection circuit that senses the voltage level between the terminals of the dimmer circuit that are connected respectively to AC power source and load. In case of over-voltage, e.g. as soon as the voltage sensed between the dimmer circuit terminals exceeds a certain threshold level, control circuitry may issue a pulse or signal to instruct the first control circuit to bring the main semiconductors in their non-conducting state, thereby protecting the varistor, because the varistor can not withstand repetitive over-voltage spikes during a long time. These repetitive over-voltage spikes can be caused by wrong dim-mode for a certain load, e.g. inductive loads in combination with LE-dim mode. The voltage sensor may consist of a rectifier circuit and a Zener diode that issues a pulse to the control circuitry as soon as the voltage level exceeds for instance a 400 V threshold.

Still optionally, the DC power supply circuit in the dimmer circuit according to the present invention may comprise a resistor, coupled in the load path of the capacitor and adapted to limit the current drawn by the capacitor during charging operation of the dimmer circuit. This optional feature is defined by claim 8.

The resistor may be designed such that the voltage drop over this resistor requires the first or second semiconductor to automatically enter the non-conductive state as soon as the charging current drawn towards the capacitor becomes excessively high, e.g. greater than 3 A or 4 A.

An additional, optional feature of the dimmer circuit according to the present invention concerns the presence of a DC/DC converter circuit coupled to an output terminal of the DC power supply circuit and adapted to convert the DC power supplied by the DC power supply circuit to one or more different DC levels. This optional feature is defined by claim 9.

Depending on the DC requirements in the dimmer, the DC power supplied by the capacitor will be transformed to the appropriate level or levels needed in the dimmer. For instance, some control circuitry may operate at rather low DC levels of 3 V or 5 V, whereas other active circuitry incorporating FETs may need higher DC voltage levels such as 12 V or 15 V.

As further defined by claim 10, the dimmer circuit according to the present invention may further comprise start-up circuitry including:
a rectifier circuit coupled to a first terminal and a second terminal of the dimmer circuit;
a second capacitor, coupled to the rectifier circuit, adapted to draw current from the AC voltage source and adapted to operate the first and second semiconductor switches in their non-conducting state at start-up until a DC voltage over the second capacitor exceeds a predetermined DC voltage, and adapted to operate the first and second semiconductor switches in their conducting state as soon as the DC voltage over the second capacitor exceeds the predetermined DC voltage supply threshold to thereby initiate charging the first capacitor; and
the second control circuitry further being adapted to operate the third and fourth semiconductor switches in their non-conducting state at start-up until a predetermined voltage supply threshold is exceeded by the first capacitor.

This way, the dimmer circuit according to the present invention can autonomously start-up. At start-up, the first and second control circuits are deactivated, and a DC voltage is built-up via the rectifier circuit and second capacitor until the first and second semiconductor switches enter their conducting state to charge the first capacitor up to a level where the first control circuit can take-over. The first control circuit takes over as soon as a predetermined DC voltage supply threshold is exceeded by the first capacitor, and controls the main semiconductor switches to operate into their conductive states. This will in turn initiate the charging of the first capacitor according to the basic principles underlying the present invention. As soon as the first capacitor is charged sufficiently to supply all active circuitry in the dimmer with the appropriate DC power(s), the dimmer becomes fully operational.

As is indicated by claim 11, the dimmer circuit (100) according to the present invention may be used in conjunction with a capacitive load.

An example of a capacitive load is an electronic transformer. In case of such capacitive load, the first control circuit will control the first and second semiconductors to implement TE-dim. Thus, the first and second semiconductors will be controlled to enter their conductive state at the start of each half cycle of the AC waveform, and will remain conductive up to an instant during the half cycle that depends on the desired dimming level. From that instant onwards, the first and second semiconductors will become non-conductive until the end of the half cycle. The desired dimming level is set by the user via a touch panel, button, PC, home automation module, or alternative user interface.

Alternatively, as indicated by claim 12, the dimmer circuit according to the present invention may be used with an inductive load.

Examples of inductive loads are a ferro-magnetic transformers, etc. In case of such inductive load, the first controller will control the first and second semiconductors to implement LE-dim. Thus, the first and second semiconductors will be controlled to remain non-conductive at the start of each half cycle of the AC waveform, and will become conductive at an instant during the half cycle that depends on the desired dimming level to remain conductive until the end of the half cycle. Eventual over-voltage spikes that may result from switching the first and second semiconductors from their conductive to their non-conductive states will be protected for by the over-voltage detection and protection circuitry.

Further alternatively, as indicated by claim 13, the dimmer circuit according to the present invention may be used with a resistive load.

The dimmer circuit according to the present invention may form part of a flush mounting dimmer, as defined by claim 14.

Indeed, thanks to the re-use of components such as the voluminous first and second power semiconductors and their eventual power dissipation fixtures such as cooling plates or cooling fins, and as a result of the rather tiny additional components, e.g. the low voltage third and fourth semiconductors with their respective control circuitry, the dimmer circuit according to the present invention realizes substantial size savings. Consequently, the dimmer circuit according to the present invention can advantageously be used in applications where size is critical, such as flush mounting applications and where relatively high DC-energy must be available parallel over a two terminal dimmer.

### Brief Description of the Drawings

Fig. 1 is a block scheme of an embodiment of the dimmer circuit 100 according to the present invention;
Fig. 2 is an electronic design scheme, illustrating the main switches portion 101 and the DC charge pump 102 of the dimmer circuit 100 of Fig. 1 in more detail;
Fig. 3 is a signal diagram illustrating the operation of the embodiment of Fig. 1 and Fig. 2 in trailing edge dimming mode (TE-dim); and
Fig. 4 is a signal diagram illustrating the operation of the embodiment of Fig. 1 and Fig. 2 in leading edge dimming mode (LE-dim).

### Detailed Description of Embodiment(s)

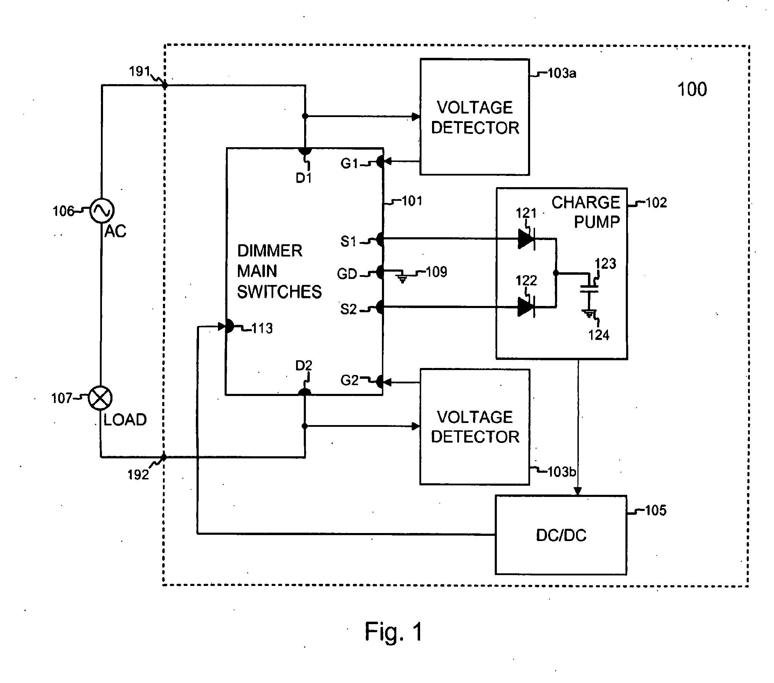

Fig. 1 shows a functional block scheme of a dimmer circuit 100 that is connected via its terminals 191 and 192 in between the 230 V / 50 Hz mains voltage 106 and a load 107, e.g. a lamp whose brightness is dimmed by dimmer circuit 100 controlling the current supplied from the AC mains 106 to the lamp 107. It is noted here that the 230 V / 50 Hz mains voltage only serves as an example as the basic principle underlying the present invention is of course applicable irrespective of the voltage level and frequency of the AC power supply. For the North-American market for instance, variant embodiments of the invention adapted to a 110 V / 60 Hz mains voltage would be conceived. The dimmer circuit 100 has main switches or semiconductors 101, a charge pump or DC voltage supply 102, a DC/DC converter 105 and voltage detection circuitry 103a and 103b. The main switches are supposed to be two field effect transistors, whose respective drains, gates and sources are denoted D1, D2, G1, G2, S1 and S2. The main switches block further has a power supply entry 113 and a ground terminal, GD or 109. The charge pump 102 has a charging capacitor 123 that is connected to the sources S1 and S2 of the respective first and second main switches via diodes 121 and 122. One terminal of capacitor 123 is connected to the ground 124, which obviously corresponds to ground GD or 109 available at the main switches. The voltage detector 103a, 103b and the DC/DC converter 105 are not further detailed but can be implemented by state of the art circuitry realizing this function. The DC/DC converter 105 is coupled between an outlet of the charge pump 102 and the voltage supply terminal 113 of the main switches section 101. The voltage detector 103a, 103b has sensing connectors at or near the terminals 191 and 192 of the dimmer circuit 100.

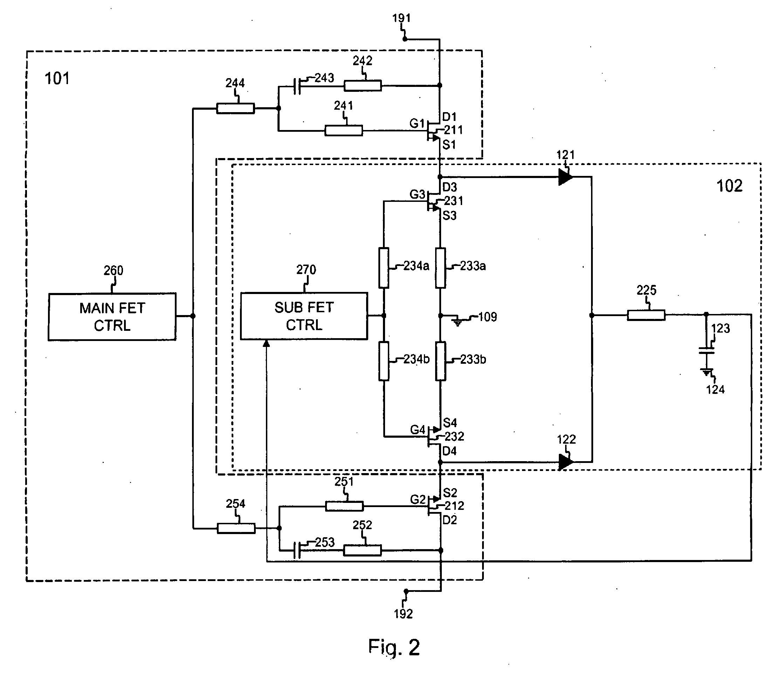

The main switches or power FETs in block 101 protect the charge pump 102, in particular the sub switches that form part of the charge pump and that are not drawn in Fig. 1, from the AC mains voltage 106. The functional block 101 hence contains power FETs which down convert the AC voltage to a lower voltage level such that sub FETs with a low Rdson value and low clamping voltage in the charge pump 102 can control the charging of the capacitor 123. In dimming operation, the current from the AC mains voltage 106 will be directed towards the load 107, whereas in charging operation, the AC current will be used to charge capacitor 123, in the first half cycle of the AC waveform via diode 121, in the second half cycle of the AC waveform via diode 122. The dimming operation depends on the desired dimming level of the lamp, and is typically set by the user through a button, rotary knob, or the like. The charging operation is controlled by means of the sub FETs, not drawn in Fig. 1 but shown in Fig. 2 as 231 and 232. The capacitor 123 charges when the sub FETs (231 or 232 in Fig. 2) are in non-conducting mode and stop charging when the sub FETs (231 or 232 in Fig. 2) are in conducting mode. The dimmer is in dimmer only mode when all FET's 211, 212, 231, and 232 are in conductive mode. The dimmer is in dimmer and charging mode when the main FET's 211 and 212 are in conductive mode and when the sub FETs 231 and 232 are in non-conductive mode. The energy stored in capacitor 123 is used, eventually after the appropriate DC/DC conversion in 105, as DC power supply for all active circuitry in the dimmer, e.g. the control circuitry of the main switches 101, the control circuitry of the sub switches in the charge pump 102, eventual RF interfaces in the dimmer, etc. The voltage detector 103a, 103b permanently senses the voltage drop over the dimmer circuitry 100 and controls the main switches either directly via their gates G1 and G2 or indirectly via control circuitry in functional block 101 to become non-conductive in case the voltage drop exceeds a certain threshold, e.g. 400 V.

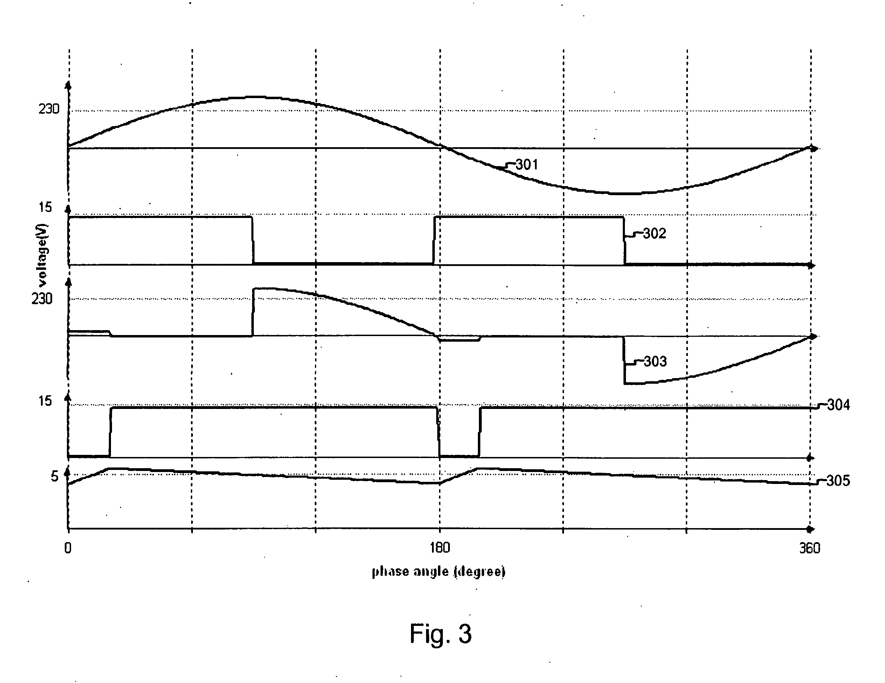

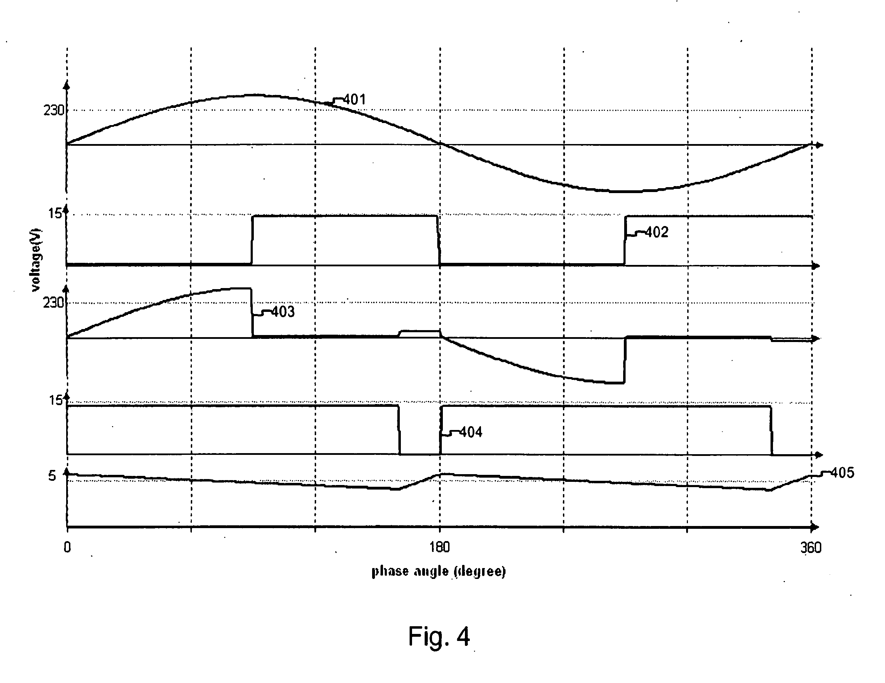

Fig. 2 shows the main switches functional block 101 and the charge pump 102 in more detail. The drain D1 of the first main switch 211 is connected to a first dimmer terminal 191. Similarly, the drain D2 of the second main switch 212 is connected to the second dimmer terminal 192. The source S1 of the first power FET 211 is connected to diode 121 and to the drain D3 of a third FET 231. The source S2 of the second power FET 212 is connected to diode 122 and to the drain D4 of a fourth FET 232. The third and fourth FETs, 231 and 232 are low voltage FETs or sub FETs that form part of the charge pump circuitry 102. The diodes 121 and 122 further connect via resistor 225 to capacitor 123 which is grounded via 124. A main FET controller 260 is coupled to the gates G1 and G2 of respectively the first and second main FET 211 and 212. In case of gate G1, the coupling is realised via the series connection of resistors 244 and 241. In case of gate G2, the coupling is realised via the series connection of resistors 254 and 251. Fig. 2 further also shows a capacitor 243 and resistor 242 which are series connected between terminal 191 of the dimmer and the point interconnecting resistor 241 and 244. In a similar fashion, Fig. 2 shows a capacitor 253 and resistor 252 that are series connected between terminal 192 and the point interconnecting the resistors 251 and 254. A sub FET controller 270 is coupled to gates G3 and G4 of respectively the third and fourth sub FET 231 and 232. In case of gate G3, the coupling is realised via resistor 234a. In case of gate G4, the coupling is realised via resistor 234b. The sources S3 and S4 of the respective sub FETs 231 and 232 are coupled to the ground terminal 109 via a resistor, respectively resistor 233a and resistor 233b. At last, Fig. 2 shows a coupling between the capacitor 123 in the charge pump 102 and a control terminal of the sub FET controller 270. In the following paragraphs, the working of the circuitry depicted in Fig. 2 will be described in detail with reference to the signal diagrams of Fig. 3 and Fig. 4.

Fig. 3 shows the AC mains voltage 301, the main FETs gate control signal 302, the voltage drop 303 between the first and second dimmer terminals 191 and 192, the sub FET gate control signal 304, and the DC voltage drop 305 over capacitor 123 in trailing edge dimming mode (TE-dim), i.e. in case of a capacitive load 107.

In trailing edge dimming mode (TE-dim), the main FETs 211 and 212 are controlled via a pulse width modulation (PWM) signal 302 supplied to their respective gates G1 and G2. The rising edge of this pulse width signal 302 is synchronized with the zero crossing of the AC mains voltage 301. The length of the pulses in PWM signal 302 depends on the desired light intensity (or in other words on the desired dimming level). The duty cycle or pulse/pause ratio of the PWM signal 302 is set by the user through a user interface, e.g. a rotary wheel. During a pulse of PWM signal 302, the main FETs 211 and 212 are in their conductive state, whereas these main FETs 211 and 212 remain in their non-conductive state during the pauses in PWM signal 302. During the positive alternation of the AC mains voltage 301 (half cycle wherein terminal 191 is positive vis-à-vis terminal 192), main FET 211 operates as a transistor and main FET 212 operates as diode. During the negative alternation of the AC mains voltage 301 (half cycle wherein terminal 191 is negative vis-à-vis terminal 192), main FET 211 operates as a diode and main FET 212 operates as a transistor. The main FETs 211 and 212 together constitute a double-throw switch. As a consequence of the operation of the main FETs 211 and 212, the voltage drop over the dimmer, i.e. the voltage drop between terminals 191 and 192, in TE-dim mode is represented by signal 303. The voltage drop over the load 107 obviously will be represented by subtracting signal 303 from the AC mains voltage 301.

Still in trailing edge dimming mode (TE-dim), the sub FETs 231 and 232 are controlled by a second pulse width modulation (PWM) signal 304 supplied to their respective gates G3 and G4 by the sub FET controller 270. The falling edge of this second PWM signal 304 is synchronized with the zero crossing of the AC mains voltage 301. The length of the pulses in the second PWM signal 304 is proportional to the voltage drop over capacitor 123. The duty cycle or pulse/pause ratio of the second PWM signal 304 is set by means of the voltage loop back between capacitor 123 and the sub FET controller 270, drawn in Fig. 2. During a pulse of the second PWM signal 304, the sub FETs 231 and 232 are in their conductive state, whereas these sub FETs 231 and 232 remain in their non-conductive state during the pauses in PWM signal 304. During the positive alternation of the AC mains voltage 301 (half cycle wherein terminal 191 is positive vis-à-vis terminal 192), sub FET 231 operates as a transistor and sub FET 232 operates as diode. During the negative alternation of the AC mains voltage 301 (half cycle wherein terminal 191 is negative vis-à-vis terminal 192), sub FET 231 operates as a diode and sub FET 232 operates as a transistor. The sub FETs 231 and 232 together also constitute a double-throw switch. As a result of the combined working of the main FETs 211 and 212 and the sub FETs 231 and 232, a DC voltage drop 305 is built-up over capacitor 123.

Fig. 4 shows the AC mains voltage 401, the main FETs gate control signal 402, the voltage drop 403 between the first and second dimmer terminals 191 and 192, the sub FET gate control signal 404, and the DC voltage drop 405 over capacitor 123 in leading edge dimming mode (LE-dim), i.e. in case of an inductive load 107.

In leading edge dimming mode (LE-dim), the main FETs 211 and 212 are controlled via a pulse width modulation (PWM) signal 402 supplied to their respective gates G1 and G2. The falling edge of this pulse width signal 402 is synchronized with the zero crossing of the AC current trough the dimmer, in Fig. 4 equal to the zero crossing of the AC mains voltage 401. The length of the pulses in PWM signal 402 depends on the desired light intensity (or in other words on the desired dimming level). The duty cycle or pulse/pause ratio of the PWM signal 402 is set by the user through a user interface, e.g. a rotary wheel. During a pulse of PWM signal 402, the main FETs 211 and 212 are in their conductive state, whereas these main FETs 211 and 212 remain in their non-conductive state during the pauses in PWM signal 402. During the positive alternation of the AC mains voltage 401 (half cycle wherein terminal 191 is positive vis-à-vis terminal 192), main FET 211 operates as a transistor and main FET 212 operates as diode. During the negative alternation of the AC mains voltage 401 (half cycle wherein terminal 191 is negative vis-à-vis terminal 192), main FET 211 operates as a diode and main FET 212 operates as a transistor. The main FETs 211 and 212 together constitute a double-throw switch. As a consequence of the operation of the main FETs 211 and 212, the voltage drop over the dimmer, i.e. the voltage drop between terminals 191 and 192, in LE-dim mode is represented by signal 403. The voltage drop over the load 107 obviously will be represented by subtracting signal 403 from the AC mains voltage 401.

Still in leading edge dimming mode (LE-dim), the sub FETs 231 and 232 are controlled by a second pulse width modulation (PWM) signal 404 supplied to their respective gates G3 and G4 by the sub FET controller 270. The rising edge of this second PWM signal 404 is now synchronized with the zero crossing of the AC current trough the dimmer, in Fig. 4 equal to the zero crossing of the AC mains voltage 401. The length of the pulses in the second PWM signal 404 is proportional to the voltage drop over capacitor 123. The duty cycle or pulse/pause ratio of the second PWM signal 404 is set by means of the voltage loop back between capacitor 123 and the sub FET controller 270, drawn in Fig. 2. During a pulse of the second PWM signal 404, the sub FETs 231 and 232 are in their conductive state, whereas these sub FETs 231 and 232 remain in their non-conductive state during the pauses in PWM signal 404. During the positive alternation of the AC mains voltage 401 (half cycle wherein terminal 191 is positive vis-à-vis terminal 192), sub FET 231 operates as a transistor and sub FET 232 operates as diode. During the negative alternation of the AC mains voltage 401 (half cycle wherein terminal 191 is negative vis-à-vis terminal 192), sub FET 231 operates as a diode and sub FET 232 operates as a transistor. As already mentioned, the sub FETs 231 and 232 together constitute a double-throw switch. As a result of the combined working of the main FETs 211 and 212 and the sub FETs 231 and 232, a DC voltage drop 405 is built-up over capacitor 123 in LE-dim mode.

Concluding, in the non-conducting period of sub FETs 231 and 232, the dimmer operates in dimming and charging mode. The voltage drop over the dimmer is higher, i.e. the sum of the normal voltage drop and the voltage drop over capacitor 123, resistor 225 and diodes 121 and 122. In the conducting period of sub FETs 231 and 232, the dimmer operates as a traditional state of the art dimmer. Unless the dimming level is very low or the load of the dimmer is very low, the interval wherein the sub FETs 231 and 232 are conductive will typically be a fraction of the interval wherein the main FETs 211 and 212 are conductive. In case the dimming level is very low or the load of the dimmer is very low, the ratio between the interval wherein sub FETs 231 and 232 are conductive and the interval wherein the main FETs 211 and 212 are conductive maximally equals 1. It is further noticed that the dimmer is permanently operating. The off-state of the dimmer is simulated through a very small dimming level.

Shunt resistor 233a, 233b limits the current during dimming operation to for instance 8 A. The resistors 241 and 244 constitute a current limiting resistor in the control loop between the main FET controller 260 and the first main FET 211. Since the gate G1 of this FET is capacitive, the series resistor constituted by 241 and 244 helps to avoid oscillations. Similarly, the resistors 251 and 254 constitute a series resistor in the control loop for the second main FET 212 and avoid oscillations there. The series connection of resistor 242 and Miller capacitor 243 between the drain D1 of the first main FET 211 and the connection point between resistors 241 and 244 delay the switching of the FET 211 to avoid RF noise induction in the AC mains. In other words, resistor 242 and Miller capacitor 243 reduce conducted emissions in the AC mains in order to satisfy national or international regulations. Similarly, the series connection of resistor 252 and Miller capacitor 253 reduce RF noise induction resulting from the switching of the second main FET 212 in the AC mains in order to comply with the applicable regulations.

When sub FET 231 is operated in its non-conductive state, the AC current received from the AC mains will pass through main FET 211, diode 121, and resistor 225 to charge the capacitor 123. Similarly, in the negative half cycle of the AC waveform, the AC current will pass through main FET 212, diode 122, and resistor 225 to charge capacitor 123 when sub FET 232 is non-conducting. The capacitor 123 may for instance have a capacitance of 1000 µF (micro Farad) and may be realised through one or more parallel capacitances. Diodes 121 and 122 may be realised through Schottky diodes that have a smaller voltage drop and consequently a smaller dissipation than regular diodes, typically around 0.3 V instead of 0.6 V, when conducting. Resistor 225 is designed to limit the current flow in charging operation, for instance to 3 A or 4 A. If the voltage drop over resistor 225 then becomes 7 V, the main FETs 211 and 212, whose respective gates G1 and G2 may for instance be assumed to be at 12 V, will automatically become non-conductive. This way, the charging current through the main FETs 211 and 212 is limited. The sub FETs 231 and 232 are protected as well in charging and dimming operation as in dimming operation by the main FETs 211 and 212 since the latter serve as high-to-low voltage converters.

In addition to the current limiting provisions described above, a varistor with clamping voltage of for instance 700 V may be coupled between the terminals 191 and 192 of the dimmer circuit. Such varistor will serve as primary voltage limiter for voltage peaks from the external AC mains or the dimmer itself, and may be supplemented with a parallel capacitor to compensate for induced RF noise.

Further, the voltage drop between the terminals 191 and 192 may be sensed permanently. The sensed voltage level may be rectified. As soon as the rectified voltage exceeds a certain threshold, e.g. 400 V, the gates G1 and G2 of the main FETs 211 and 212 may be controlled to operate the main FETs 211 and 212 in their non-conductive states as a result of which the dimmer circuit will be deactivated, to avoid over-voltage caused by the dimmer itself.

An important aspect of the dimmer circuit drawn in Fig. 2 is its start-up behaviour. At start-up, the main FET controller 260 and sub FET controller 270 are deactivated. As a consequence, the main FETs 211 and 212 as well as the sub FETs 231 and 232 are non-conducting. A second capacitor, not drawn in Fig. 2, may build up a voltage drop. This second capacitor may for instance be coupled to the rectifier circuit that is used to sense the voltage between the terminals 191 and 192. As soon as the voltage charged on the second capacitor reaches a certain level, e.g. 3V, the second capacitor will serve as power supply for the main FET controller 260 that will control the main FET's 211 and 212 to become operational in their conductive states. Since the sub FETs are still non-conducting, the AC current drawn from the AC mains will start charging capacitor 123 up to a level where the latter capacitor 123 is able to take-over power supply for all active components in the dimmer circuit. Via eventual DC/DC converters, the main FET controller 260, the sub FET controller 270, and other active circuitry such as for instance an RF interface of the dimmer, will be supplied with the appropriate DC power levels. From this point onwards, the dimmer circuit becomes fully operational, as described above. The sub FETs 231 and 232 will be controlled to switch between dimming operation on the one hand and dimming and charging operation on the other hand, depending on the desired dimming level. Thanks to the charging and dimming operation, the dimmer circuit will extract the necessary DC power for its controllers and active components from the leakage current.

Apart from the reduced heat dissipation (ratio between the heat dissipated and the required energy to operate the dimmer) that renders the current invention attractive for flush mount applications, the low voltage DC supply that forms part of the dimmer according to the present invention can store more energy than traditional solutions because the charge pump is active.

## Claims

1. A dimmer circuit (100) for controlling a current delivered from an AC voltage source (106) to a load (107), said dimmer circuit (100) comprising:
first and second semiconductor switches (211, 212) anti-serial coupled between said AC voltage source (106) and said load (107), and operable to have a conducting state and a non-conducting state;
a first control circuit (260) adapted to control said first and second semiconductor switches (211, 212) to operate respectively in their conducting state or non-conducting state; and
a DC power supply circuit (102) comprising a capacitor (123), adapted to draw current from said AC voltage source (106) and adapted to supply DC power to at least said first control circuit (260),
**CHARACTERIZED IN THAT** said DC power supply circuit (102) is adapted to draw current from said AC voltage source (106) during at least part of said conducting state of said first and second semiconductor switches (211, 212), said dimmer circuit (100) thereto comprising:
third and fourth semiconductor switches (231, 232) anti-serial coupled between said first and second semiconductor switches (211, 212), and operable to have a conducting state and a non-conducting state during which non-conducting state said capacitor (123) is charged; and
a second control circuit (270) adapted to control said third and fourth semiconductor switches (231, 232) to operate into their conducting state during dimming operation of said dimmer circuit (100) and to operate into their non-conducting state during said charging of said capacitor (123) and dimming operation of said dimmer circuit (100).

2. A dimmer circuit (100) according to claim 1, **CHARACTERIZED IN THAT** said first and second semiconductor switches (211, 212) are power field effect transistors with a Rdson value of at least 100 milli-Ohms.

3. A dimmer circuit (100) according to claim 1, **CHARACTERIZED IN THAT** said third and fourth semiconductor switches (231, 232) are low power field effect transistors with a Rdson value of at most 50 milli-Ohms.

4. A dimmer circuit (100) according to claim 1, **CHARACTERIZED IN THAT** said dimmer circuit (100) further comprises a shunt resistor (233a, 233b), coupled between said third and fourth semiconductor switches (231, 232), and adapted to limit said current delivered to said load (107) during dimming operation of said dimmer circuit (100).

5. A dimmer circuit (100) according to claim 4, **CHARACTERIZED IN THAT** said dimmer circuit (100) further comprises a protective feedback loop adapted to sense a current level through said shunt resistor (233a, 233b), and adapted to instruct said first control circuit (260) to operate said first and second semiconductor switches (211, 212) in their non-conductive state within a time interval of 100 microseconds from the instant where said current level exceeds a certain threshold.

6. A dimmer circuit (100) according to claim 1, **CHARACTERIZED IN THAT** said dimmer circuit (100) further comprises a clamping varistor, coupled between its first terminal (191) and its second terminal (192), and adapted to protect said dimmer circuit (100) for external over-voltages from said AC power supply (106).

7. A dimmer circuit (100) according to claim 1, **CHARACTERIZED IN THAT** said dimmer circuit (100) further comprises a voltage detection circuit (103a, 103b) adapted to sense a voltage from said AC power supply (106) or from the dimmer itself over said dimmer circuit (100), and adapted to control said first and second semiconductor switches (211, 212) to operate in their non-conducting state.

8. A dimmer circuit (100) according to claim 1, **CHARACTERIZED IN THAT** said DC power supply circuit (102) further comprises a resistor (225), coupled in the load path of said capacitor (123) and adapted to limit said current drawn by said capacitor (123) during charging operation of said dimmer circuit (100).

9. A dimmer circuit (100) according to claim 1, **CHARACTERIZED IN THAT** said dimmer circuit (100) further comprises a DC/DC converter circuit (105) coupled to an output terminal of said DC power supply circuit (102) and adapted to convert said DC power supplied by said DC power supply circuit (102) to one or more different DC levels.

10. A dimmer circuit (100) according to claim 1, **CHARACTERIZED IN THAT** said dimmer circuit (100) further comprises start-up circuitry comprising:
a rectifier circuit coupled to a first terminal (191) and a second terminal (192) of said dimmer circuit (100);
a second capacitor, coupled to said rectifier circuit adapted to draw current from said AC voltage source (106) and adapted to operate said first and second semiconductor switches (211, 212) in their non-conducting state at start-up until a DC voltage over said second capacitor exceeds a predetermined DC voltage supply threshold, and adapted to operate said first and second semiconductor switches (211, 212) in their conducting state as soon as a DC voltage over said second capacitor exceeds said predetermined DC voltage supply threshold to thereby initiate charging said capacitor (123); and
said second control circuitry (270) further being adapted to operate said third and fourth semiconductor switches (231, 232) in their non-conducting state at start-up until a predetermined voltage supply threshold is exceeded by said capacitor (123).

11. A dimmer circuit (100) according to claim 1, **CHARACTERIZED IN THAT** said load (107) is capacitive.

12. A dimmer circuit (100) according to claim 1, **CHARACTERIZED IN THAT** said load (107) is inductive.

13. A dimmer circuit (100) according to claim 1, **CHARACTERIZED IN THAT** said load (107) is resistive.

14. A dimmer circuit (100) according to claim 1, **CHARACTERIZED IN THAT** said dimmer circuit (100) forms part of a flush mounting dimmer.

## Patentansprüche

1. Eine Dimmerschaltung (100) zur Kontrolle der Stromzufuhr von einer Wechselstrom ("WS") - Spannungsquelle (106) zu einem Ladepunkt (107), die Dimmerschaltung (100) besteht aus:
einem ersten und zweiten Halbleiterschalter (211, 212) anti-seriell zwischen der WS-Spannungsquelle (106) und dem Ladepunkt (107) gekoppelt, und ausgestattet mit einer Leitungsfunktion und einer Nicht-Leitungsfunktion;
eine erste Steuerschaltung (260) zwischengeschaltet, um den ersten und zweiten Halbleiterschalter (211,212) zu steuern, die entweder in ihrer Leitungsfunktion oder einer Nicht-Leiterfunktion betrieben werden; und
ein Gleichstrom ("GS") -Stromnetz (102) besteht aus einem Kondensator (123), zwischengeschaltet, um Strom von WS-Spannungsquelle (106) abzuziehen und zwischengeschaltet, um zumindest die Steuerschaltung (260) mit GS zu versehen,
**DADURCH GEKENNZEICHNET DASS** die GS-Stromnetz (102) zwischengeschaltet ist, um von die WS-Spannungsquelle (106) zumindest während eines Teils der Leitungsfunktion des ersten und zweiten Halbleiterschalters (211, 212) Strom zugeführt zu bekommen, die Dimmerschaltung (100) besteht dazu aus:
einem dritten und vierten Halbleiterschalter (231, 232) anti-seriell zwischen dem ersten und zweiten Halbleiterschalter (211, 212) gekoppelt und mit einer Leitungsfunktion und einer Nicht-Leitungsfunktion ausgestattet, wobei während der Nicht-Leiterfunktion die Kondensator (123) aufgeladen wird; und
eine zweite Steuerschaltung (270), zwischengeschaltet, um den dritten und vierten Halbleiterschalter (231, 232) zu steuern, die entweder in ihrer Leitungsfunktion betrieben werden, wenn die Dimmerschaltung (100) in der Dimmfunktion steht oder in einer Nicht-Leiterfunktion betrieben werden, wenn die Kondensator (123) aufgeladen wird und die Dimmerschaltung (100) in der Dimmfunktion steht.

2. Eine Dimmerschaltung (100) nach Anspruch 1, **DADURCH GEKENNZEICHNET DASS** diesem ersten und zweiten Halbleiterschalter (211, 212) sind Kraftfeld Effekt Transistoren mit einem Einschaltwiderstand von mindestens 100 Milliohm.

3. Eine Dimmerschaltung (100) nach Anspruch 1, **DADURCH GEKENNZEICHNET DASS** in diesem dritten und vierten Halbleiterschalter (231, 232) sind Niedrig-Kraftfeld Effekt Transistoren mit einem Einschaltwiderstand von höchstens 50 Milliohm.

4. Eine Dimmerschaltung (100) nach Anspruch 1, **DADURCH GEKENNZEICHNET DASS** dieser Dimmerschaltung (100) außerdem besteht aus einen Parallelwiderstand (233a, 233b), gekoppelt zwischen dem dritten und vierten Halbleiterschalter (231, 232) und zwischengeschaltet, um den zugeführten Strom zu dem Ladepunkt (107) während der Dimmfunktion der Dimmerschaltung (100) zu regulieren.

5. Eine Dimmerschaltung (100) nach Anspruch 4, **DADURCH GEKENNZEICHNET DASS** dieser Dimmerschaltung (100) außerdem besteht aus einen Sicherheits-Regelkreis, der zwischengeschaltet ist, um die Stromzufuhr durch die Parallelwiderstand (233a, 233b) zu regeln und zwischengeschaltet, um der ersten Steuerschaltung (260) den Befehl zu geben, den ersten und zweiten Halbleiterschalter (211, 212) in deren Nicht-Leiterfunktion zu betreiben, innerhalb eines Zeitintervalls von 100 Mikrosekunden von dem Moment, an dem Stromzufuhr eine bestimmte Grenze überschreitet.

6. Eine Dimmerschaltung (100) nach Anspruch 1, **DADURCH GEKENNZEICHNET DASS** dieser Dimmerschaltung (100) außerdem besteht aus einen angeklemmten spannungsabhängigen Widerstand (Varistor), der zwischen dessen erster (191) und zweiter Klemme (192) gekoppelt wurde und zwischengeschaltet ist, um die Dimmerschaltung (100) vor einer externen Überspannung aus WS-Stromnetz (106) zu schützen.

7. Eine Dimmerschaltung (100) nach Anspruch1, **DADURCH GEKENNZEICHNET DASS** dieser Dimmerschaltung (100) außerdem besteht aus eine Spannungserkennungsschaltung (103a, 103b), zwischengeschaltet, um die Spannung von WS-Stromnetz (106) oder von dem Dimmer der Dimmerschaltung (100) zu regulieren und zwischengeschaltet, um den ersten und zweiten Halbleiterschalter (211, 212) in deren Nicht-Leiterfunktion zu betreiben.

8. Eine Dimmerschaltung (100) nach Anspruch 1, **DADURCH GEKENNZEICHNET DASS** diesem GS-Stromnetz (102) außerdem besteht aus einen Widerstandskörper (225), gekoppelt in die Bahn zum Ladepunkt von die Kondensator (123) und zwischengeschaltet, um den von dem Kondensator (123) verbrauchten Strom zu regulieren, während des Aufladevorgangs der Dimmerschaltung.

9. Eine Dimmerschaltung (100) nach Anspruch 1, **DADURCH GEKENNZEICHNET DASS** dieser Dimmerschaltung (100) außerdem besteht aus eine GS/GS-Konverterschaltung (105), gekoppelt an eine Ausgangsklemme des GS-Stromnetzes (102) und zwischengeschaltet, um den Gleichstrom, der von dem GS-Stromnetz (102) zur Verfügung gestellt wird, in eine oder mehrere GS-Niveaus umzuwandeln.

10. Eine Dimmerschaltung (100) nach Anspruch 1, **DADURCH GEKENNZEICHNET DASS** dieser Dimmerschaltung (100) außerdem besteht aus eine Anlassschaltung mit:
einer Gleichrichterschaltung, die an die erste Klemme (191) und eine zweite Klemme (192) der Dimmerschaltung (100) gekoppelt ist;
ein zweiter Kondensator, der an die Gleichrichterschaltung gekoppelt ist und zwischengeschaltet ist, um den Strom von der WS-Spannungsquelle (106) abzuziehen und zwischengeschaltet, um den ersten und zweiten Halbleiterschalter (211, 212) beim Anlassen in deren Nicht-Leiterfunktion zu betreiben, bis die GS-Spannung des zweiten Kondensators die im Vorhinein festgelegte GS-Spannungsgrenze überstiegen hat, und zwischengeschaltet, um den ersten und zweiten Halbleiterschalter (211, 212) in deren Leiterfunktion zu betreiben, sobald die GS-Spannung des zweiten Kondensators die im Vorhinein festgelegte GS-Spannungsgrenze übersteigt und damit das Aufladen des Kondensators (123) startet; und
die Steuerschaltung (270) außerdem zwischengeschaltet wird, um den dritten und vierten Halbleiterschalter (231, 232) in deren Nicht-Leiterfunktion beim Anlassen zu betreiben, bis eine im Vorhinein festgelegte Spannungsgrenze von dem Kondensator (123) überschritten wird.

11. Eine Dimmerschaltung (100) nach Anspruch 1, **DADURCH GEKENNZEICHNET DASS** diesem Ladepunkt (107) kapazitiv ist.

12. Eine Dimmerschaltung (100) nach Anspruch 1, **DADURCH GEKENNZEICHNET DASS** diesem Ladepunkt (107) induktiv ist.

13. Eine Dimmerschaltung (100) nach Anspruch 1, **DADURCH GEKENNZEICHNET DASS** diesem Ladepunkt (107) resistiv ist.

14. Eine Dimmerschaltung (100) nach Anspruch 1, **DADURCH GEKENNZEICHNET DASS** dieser Dimmerschaltung (100) ist Bestandteil eines eingelassenen Dimmers.

## Revendications

1. Un circuit variateur (100) pour commander un courant délivré à partir d'une source d'alimentation en CA (106) à une charge (107), ledit circuit variateur (100) comprenant :
un premier et un deuxième commutateurs à semi-conducteur (211, 212) anti-série couplés entre ladite source d'alimentation en CA (106) et ladite charge (107), et utilisables pour avoir un état conducteur et un état non conducteur ;
un premier circuit de commande (260) adapté pour faire fonctionner lesdits premier et deuxième commutateurs à semi-conducteur (211, 212) respectivement dans leur état conducteur ou leur état non conducteur ; et
un circuit d'alimentation en CC (102) comprenant un condensateur (123), adapté pour débiter du courant à partir de ladite source d'alimentation en CA (106) et adapté pour délivrer du CC au moins audit premier circuit de commande (260),
**CARACTÉRISÉ EN CE QUE** ledit circuit d'alimentation en CC (102) est adapté pour débiter du courant depuis ladite source d'alimentation en CA (106) pendant au moins une partie dudit état conducteur desdits premier et deuxième commutateurs à semi-conducteur (211, 212), ledit circuit variateur (100) y comprenant :
un troisième et un quatrième commutateurs à semi-conducteur (231, 232) anti-série couplés entre lesdits premier et deuxième commutateurs à semi-conducteur (211, 212), et utilisables pour avoir un état conducteur et un état non conducteur, ledit condensateur (123) étant chargé pendant ledit état non conducteur ; et
un deuxième circuit de commande (270) adapté pour faire fonctionner lesdits troisième et quatrième commutateurs à semi-conducteur (231, 232) dans leur état conducteur pendant l'opération de variation dudit circuit variateur (100) et les faire fonctionner dans leur état non conducteur pendant ledit chargement dudit condensateur (123) et l'opération de variation dudit circuit variateur (100).

2. Un circuit variateur (100) selon la revendication 1, **CARACTÉRISÉ EN CE QUE** lesdits premier et deuxième commutateurs à semi-cflnducteur (211, 212) sont des transistors de puissance à effet de champ d'une valeur Rdson d'au moins 100 milli-Ohms.

3. Un circuit variateur (100) selon la revendication 1, **CARACTÉRISÉ EN CE QUE** lesdits troisième et quatrième commutateurs à semi-conducteur (231, 232) sont des transistors à effet de champ de faible puissance d'une valeur Rdson maximum de 50 milli-Ohms.

4. Un circuit variateur (100) selon la revendication 1, **CARACTÉRISÉ EN CE QUE** ledit circuit variateur (100) comprend en outre une résistance en dérivation (233a, 233b), couplée entre lesdits troisième et quatrième commutateurs à semi-conducteur (231, 232), et adaptée pour limiter ledit courant délivré à ladite charge (107) pendant l'opération de variation dudit circuit variateur (100).

5. Un circuit variateur (100) selon la revendication 4, **CARACTÉRISÉ EN CE QUE** ledit circuit variateur (100) comprend en outre une boucle d'asservissement protectrice adaptée pour détecter un niveau de courant au travers de ladite résistance en dérivation (233a, 233b), et adaptée pour envoyer audit premier circuit de commande (260) l'instruction de faire fonctionner lesdits premier et deuxième commutateurs à semi-conducteur (211, 212) dans leur état non conducteur dans un intervalle de temps de 100 microsecondes à partir du moment où ledit niveau de courant dépasse un certain seuil.

6. Un circuit variateur (100) selon la revendication 1, **CARACTÉRISÉ EN CE QUE** ledit circuit variateur (100) comprend en outre une varistance de bridage, couplée entre sa première borne (191) et sa deuxième borne (192), et adaptée pour protéger ledit circuit variateur (100) contre les surtensions externes de ladite alimentation en CA (106).

7. Un circuit variateur (100) selon la revendication 1, **CARACTÉRISÉ EN CE QUE** ledit circuit variateur (100) comprend en outre un circuit de détection de tension d'alimentation (103a, 103b) adapté pour détecter une tension à partir de ladite alimentation en CA (106) ou à partir du variateur lui-même sur ledit circuit variateur (100), et adapté pour faire fonctionner lesdits premier et deuxième commutateurs à semi-conducteur (211, 212) dans leur état non conducteur.

8. Un circuit variateur (100) selon la revendication 1, **CARACTÉRISÉ EN CE QUE** ledit circuit d'alimentation en CC (102) comprend en outre une résistance (225), couplée au chemin de charge dudit condensateur (123) et adaptée pour limiter ledit courant débité par ledit condensateur (123) lors de l'opération de chargement dudit circuit variateur (100).

9. Un circuit variateur (100) selon la revendication 1, **CARACTÉRISÉ EN CE QUE** ledit circuit variateur (100) comprend en outre un circuit convertisseur CC/CC (105) couplé à une borne de sortie dudit circuit d'alimentation en CC (102) et adapté pour convertir ledit CC fourni par ledit circuit d'alimentation en CC (102) à un niveau de CC ou à plusieurs niveaux de CC différents.

10. Un circuit variateur (100) selon la revendication 1, **CARACTÉRISÉ EN CE QUE** ledit circuit variateur (100) comprend en outre un ensemble de circuits de démarrage comprenant :
un circuit redresseur couplé à une première borne (191) et à une deuxième borne (192) dudit circuit variateur (100);
un second condensateur, couplé audit circuit redresseur adapté pour débiter du courant à partir de ladite source d'alimentation en CA (106) et adapté pour faire fonctionner lesdits premier et deuxième commutateurs à semi-conducteur (211, 212) dans leur état non conducteur au démarrage jusqu'à ce qu'une tension de CC sur ledit deuxième condensateur dépasse un seuil prédéterminé d'alimentation électrique en CC, et adapté pour faire fonctionner lesdits premier et deuxième commutateurs à semi-conducteur (211, 212) dans leur état conducteur dès qu'une tension de CC sur ledit deuxième condensateur dépasse ledit seuil prédéterminé d'alimentation électrique en CC et déclenche ainsi le chargement dudit condensateur (123) ;
ledit deuxième ensemble de circuits de commande (270) étant en outre adapté pour faire fonctionner lesdits troisième et quatrième commutateurs à semi-conducteur (231, 232) dans leur état non conducteur au démarrage jusqu'à ce qu'un seuil prédéterminé d'alimentation électrique soit dépassé par ledit condensateur (123).

11. Un circuit variateur (100) selon la revendication 1, **CARACTÉRISÉ EN CE QUE** ladite charge (107) est capacitive.

12. Un circuit variateur (100) selon la revendication 1, **CARACTÉRISÉ EN CE QUE** ladite charge (107) est inductive.

13. Un circuit variateur (100) selon la revendication 1, **CARACTÉRISÉ EN CE QUE** ladite charge (107) est résistive.

14. Un circuit variateur (100) selon la revendication 1, **CARACTÉRISÉ EN CE QUE** ledit circuit variateur (100) fait partie d'un variateur encastré.
